# EUROPEAN PATENT APPLICATION

(11) **EP 4 841 243 A1**
(43) Date of publication of application: **18.11.2026**
(21) Application number: 25176939.4
(22) Date of filing: 16.05.2025
(51) Int. Cl.: G01N 21/359, G01N 21/84

(54) **USE OF NIR SPECTROSCOPY IN A MELAMINE PROCESS, AND RELATED METHOD AND PLANT**

(71) Applicant: CASALE SA, 6900 Lugano (CH)
(72) Inventor: BIASI, Pierdomenico, 22100 Como (IT); NARDI, Luca, 21040 Sumirago (VA) (IT); BENEDETTI, Alberto, 22100 Como (IT); FERRI, Davide, 8050 Zürich (CH); ALXNEIT, Ivo, 4053 Basel (CH); D'ALESSANDRI, John, 5210 Windisch (CH); CAMBIE', Federico, 5405 Baden-Dättwil (CH)
(74) Representative: M. Zardi & Co S.A.

(57) **Abstract**

A method comprising the following steps: (I) reacting urea in a melamine synthesis section to obtain melamine and an offgas comprising ammonia (NH₃) and carbon dioxide (CO₂); (II) subjecting one or more process stream(s) of said melamine synthesis section to Near Infrared (NIR) spectroscopy to obtain a NIR spectrum or NIR spectra and thereby a qualitative determination of one or more chemical species in said one or more process stream(s); (III) processing said NIR spectrum or NIR spectra to obtain a quantitative determination of said one or more chemical species.

A plant and a use of NIR spectroscopy for obtaining a NIR spectrum or NIR spectra are also disclosed.

## Description

### Field of the invention

The present invention relates to analytical methods in melamine synthesis process and plants. Particularly, the invention refers to a qualitative and quantitative determination of chemical species by means of Near Infrared (NIR) spectroscopy in one or more process stream(s) of a melamine plant.

### Prior art

Today, melamine (C₃N₃(NH₂)₃; 2,4,6-triamino-1,3,5-triazine; CAS N. 108-78-1) is produced industrially almost exclusively from urea (H₂N-CO-NH₂) according to the following reaction:

6 H₂N-CO-NH₂ → C₃N₃(NH₂)₃ + 6 NH₃ + 3 CO₂

The synthesis processes may be subdivided into noncatalytic, high-pressure (≥ 8 MPa) processes, and catalytic, low-pressure processes (ca. 1 MPa). A detailed description of available melamine synthesis processes can be found in George M. Crews et al., "Melamine and Guanamines" (2012), Ullmann's Encyclopedia of Industrial Chemistry.

High-pressure processes are usually preferred because they produce melamine in a liquid phase instead of a vapor phase, and due to the fact that these processes produce high-pressure ammonia (NH₃) and carbon dioxide (CO₂) (jointly designated as "*offgas*") that are more suitable for being recycled in a tied-in offgas-fed urea plant.

A melamine high-pressure synthesis section may comprise two reaction stages arranged in series, whereby a first reaction stage produces a raw melamine melt (a melamine-containing liquid effluent) and a second reaction stage is arranged for removing carbon dioxide from the raw melamine melt using a stripping agent, e.g., ammonia. Afterwards, the liquid effluent of the second reaction stage is subjected to further treatments in order to obtain a solid melamine product of desired purity.

Integration of a melamine plant and a urea plant is an attractive solution because urea is the starting material for the synthesis of melamine, whereas melamine offgas - whose main components are ammonia and carbon dioxide - can be recycled to the tied-in urea plant to react and produce further urea for the melamine synthesis reaction.

Usually, process streams in melamine synthesis are analysed with *off-line* procedures, in particular by sampling process streams that are subsequently analysed in a laboratory.

More in detail, sampling is performed by collecting a process stream from a pressurized environment. This off-line procedure has several drawbacks, among others:
- sampling from a pressurized environment must be performed by more than one experienced worker for safety reasons;
- the most volatile compounds might go lost in spite of all due care during sampling, thereby affecting accuracy of the analysis;
- the samples must be correctly quenched to block reaction kinetics (which could affect the composition of the sample);
- besides the reaction having been correctly quenched, a time delay from sampling to analysis still has an influence on the amounts of the analysed substances;
- reaction conditions are different from analysis conditions (in terms of differing pressures and temperatures), and this is an additional circumstance reducing analytical precision because diverse conditions change chemical equilibrium.

In-line analysis is difficult to be implemented because of the high corrosive nature of the reaction environment; pressure and temperature conditions during melamine synthesis, due to a supercritical behaviour of the components in the synthesis section and to the presence of water that has a matrix effect causing a loss or an increase in response.

Dilutions typically used to quench and prepare the sample for laboratory analysis further modify the composition and chemical equilibria of the sampled specimen with respect to the actual conditions within the ongoing process.

WO 2015/189075 A1 of the same Applicant discloses Raman spectroscopy applied to urea process streams.

In view of the above, there is an increasing need to perform more accurate analysis in order to obtain an improved picture of melamine plant streams.

### Summary of the invention

The scope of the present invention is to overcome the above drawbacks. The invention concerns a method, a plant and a use according to the attached independent claims. Preferred embodiments are described in the dependent claims.

An object of the present invention is a method comprising the following steps:
(I) reacting urea in a melamine synthesis section to obtain melamine and an offgas comprising ammonia (NH₃) and carbon dioxide (CO₂);
(II) subjecting one or more process stream(s) of said melamine synthesis section to Near Infrared (NIR) spectroscopy to obtain a NIR spectrum or NIR spectra and thereby a qualitative determination of one or more chemical species in said one or more process stream(s);
(III) processing said NIR spectrum or NIR spectra to obtain a quantitative determination of said one or more chemical species.

Another object of the present invention is a plant comprising:
(A) a melamine synthesis section wherein urea is reacted to obtain melamine and an offgas comprising ammonia (NH₃) and carbon dioxide (CO₂);
(B) one or more Near Infrared (NIR) spectroscopic probes positioned at one or more process stream(s) of said melamine synthesis section;
(C) at least one NIR spectroscopic apparatus functionally connected with said NIR spectroscopic probes to obtain a NIR spectrum or NIR spectra;
(D) at least a processing unit of said NIR spectrum or NIR spectra configured to obtain a quantitative determination of said one or more chemical species.

Still another object of the present invention is a use of Near Infrared (NIR) spectroscopy for obtaining a NIR spectrum or NIR spectra and thereby a determination of one or more chemical species in one or more process stream(s) of a melamine process.

In practice, the present invention allows to achieve a determination of one or more chemical species in said process stream(s) of a melamine process, preferably melamine synthesis, making use of a NIR spectrum or NIR spectra. Such NIR spectrum or NIR spectra provide(s) direct qualitative information of said chemical species, and also quantitative information of said chemical species after appropriate processing.

### Description of the preferred embodiments of the present invention

Preferably, said melamine process comprises at least one from among a synthesis process, a quenching process, a purification process, a crystallisation process, a solid-liquid separation process, a waste water treatment process, and/or a drying process.

More preferably, said synthesis process is an integrated urea and melamine synthesis process.

According to possible embodiments, melamine obtained in step (I) may be a melamine solution or a melamine melt (i.e., a highly concentrated liquid melamine).

Preferably, said melamine synthesis section or process is a non-catalytic, high-pressure synthesis section or process.

According to a first preferred embodiment, said one or more process stream(s) is/are liquid process stream(s). Preferably, said one or more liquid process stream(s) is/are aqueous process stream(s).

According to a second preferred embodiment, said one or more process stream(s) is/are gaseous process stream(s).

According to different embodiments, said process stream(s) is/are contained in any of a melamine reactor, a melamine post-reactor, a quenching apparatus, a crystallization section, a desublimation apparatus, a scrubber or washing column, a drying unit, a waste water treatment unit, and their combinations, and/or is/are a feed stream and/or an effluent stream of a melamine reactor, a melamine post-reactor, a quenching apparatus, a crystallization section, a desublimation apparatus, a scrubber or washing column, a drying unit, a waste water treatment unit, and their combinations.

Preferably, wherein said effluent stream of the melamine reactor and/or of the melamine post-reactor is an offgas stream.

More preferably, said melamine reactor and a melamine post-reactor are part of a melamine non-catalytic, high-pressure synthesis section.

As possible non-limiting examples, said process stream(s) is/are:
- Outlet stream of the reactor and/or post-reactor, where melamine and/or urea content is monitored to estimate the reactor conversion; NH₃ and water contents may also be determined to establish a CO₂ stripping efficiency; a CO₂ content determination may be useful in order to reduce or minimize a consumption of alkaline compounds used in a low-pressure sections for purifying melamine-containing streams. These alkaline compounds may include ammonia and sodium hydroxide;
- Melamine-containing streams in low-pressure sections, where the continuous determination of alkaline compound content(s) (such as ammonia and/or sodium hydroxide, which are employed for purifying melamine-containing streams) allows for a stringent control over purification unit operations;

- Waste water treatment (WWT) streams, for continuous determination of residual melamine content and its derivatives for an improvement or optimization of high-pressure steam consumption. This may ensure high-performance operation of the hydrolizer, maintaining residual compound concentrations in treated process water below a few parts per million (ppm).
- Offgas stream coming from an offgas condenser for determination of the melamine content (due to melamine carryover in the offgas).

According to an embodiment, said NIR spectroscopy is Fourier Transform-Near Infrared (FT-NIR) spectroscopy. Preferably, a single NIR spectrum is the result of a plurality of spectroscopic acquisitions, e.g., at least five, or at least ten, or at least fifteen, or at least twenty different spectroscopic acquisitions.

As an example, a NIR Fourier Transform Spectrometer MATRIX-F II (according to ATEX) by Bruker may be used. As another example, each spectrum may be acquired with an OPUS/QUANT2 software by Bruker. Such software (or analogous program) may be used to evaluate main parameters for every characteristic peak, such as area, height, and/or position/shift (wavenumber).

According to another embodiment, said NIR spectroscopy covers a region of the electromagnetic spectrum comprised from 12500 cm⁻¹ to 4000 cm⁻¹. The preferred regions of the electromagnetic spectrum for the purpose of the present invention is/are comprised from 9400 cm⁻¹ to 7500 cm⁻¹ and from 6100 cm⁻¹ to 5448 cm⁻¹.

Consequently, said one or more NIR spectroscopic probes and said at least one NIR spectroscopic apparatus are preferably configured for covering that same region of the electromagnetic spectrum.

It is pointed out that a NIR spectrum or NIR spectra obtained or measured in said region(s) of the electromagnetic spectrum is/are used for the determination of chemical species.

According to a possible embodiment, an optical path length of said NIR spectroscopy is comprised from 2 mm to 20 mm, preferably comprised from 4 mm to 15 mm, more preferably comprised from 5 mm to 10 mm. Consequently, said one or more NIR spectroscopic probes and said at least one NIR spectroscopic apparatus are preferably configured for covering that same optical path length.

Preferably, said determination (step (II)) comprises or consists of a real-time and *in situ* determination of said chemical species in said process stream(s).

According to a preferred embodiment, said obtaining the NIR spectrum or NIR spectra is performed without sampling of said one or more process stream(s). Expressed in other terms, said obtaining or subjecting of step (II) is not preceded by sampling of said one or more process stream(s).

In the present description "sampling" means collecting or taking a part of a process stream from its environment, said part being selected as a sample for inspection or analysis, in particular for obtaining the NIR spectrum or NIR spectra.

Said chemical species are preferably selected from among melamine, melamine salts, melamine derivatives, sodium hydroxide, and combinations of two or more thereof.

Melamine derivatives may be selected from melamine deammoniation and condensation derivatives and/or melamine hydrolysis derivatives. E.g., melamine deammoniation and condensation derivative are melem, melone, and/or melam. E.g., melamine hydrolysis derivatives are ammeline, ammelide, and/or cyanuric acid.

Chemical species according to another embodiment are one or more selected from ammonia, carbon dioxide, ammonium carbamate, water, urea, and combinations thereof.

Preferably, said qualitative determination of step (II) comprises an identification of characteristic peak(s) of said one or more chemical species in said NIR spectra at a specific temperature (T) and at a specific pressure (P).

In general terms, these specific temperature and specific pressure correspond to temperature and pressure values of the process stream in a specific location of the melamine plant. As an example, said specific temperature and specific pressure may correspond to melamine-forming conditions.

According to an embodiment, the specific temperature is comprised from 300 °C to 470 °C, preferably from 330 °C to 450 °C, more preferably from 350 °C to 420 °C, even more preferably from 365 °C to 385 °C.

According to another embodiment, the specific pressure is equal to or higher than 70 bar, preferably comprised from 70 bar to 300 bar, more preferably from 72 bar to 250 bar, even more preferably from 75 bar to 200 bar.

According to a preferred embodiment, said quantitative determination of step (III) comprises applying a chemometric method to data of said NIR spectra. Preferably said data of the NIR spectra comprise characteristic peak areas/intensities. As an example, a software (such as an OPUS software by Bruker, such as an OPUS/QUANT2 software) may be used to apply said chemometric method. Preferably, said chemometric method is or comprises a partial least squares (PLS) regression method, and/or a principal component regression (PCR) method, and/or a multiple linear regression (MLR) method. A PLS regression method is preferred.

Preferably, said chemometric method involves a multivariate calibration.

The chemometric method makes use of a number of NIR spectra obtained in view of a series of calibration experiments with different known reference values such as: specific temperatures, specific pressures, amounts of each chemical species, amounts and weight ratios of chemical species in combination with each other, etc.

Preferably, said plant is devoid of sampling means (e.g., sampling devices or sampling apparatuses) of the one or more process stream(s).

Even more preferably, the said one or more NIR spectroscopic probes are positioned within said one or more process stream(s), i.e., at least partially immersed in said process stream(s).

According to an embodiment, said NIR spectroscopic probe(s) is/are connected with said processing unit by optical fiber(s).

According to another embodiment, said processing unit comprises or consists of a programmable logic controller (PLC).

According to a preferred embodiment, said plant is an integrated urea and melamine synthesis plant comprising said melamine synthesis section and a urea synthesis section fed with said offgas, said urea synthesis section providing urea to be reacted in said melamine synthesis section.

### Advantages of the present invention

Advantageously, a stringent control of the composition of the process stream(s) is possible according to the present invention.

Specifically, monitoring a residual urea content enables an estimation of the melamine synthesis conversion rate and, consequently, of the process performance (e.g., the heat exchange efficiency and the recirculation efficiency at the primary or secondary reaction stages, mentioned as only two of many possible examples).

Furthermore, according to another advantageous aspect, monitoring of a residual CO₂ content is possible in order to minimize a consumption of alkaline compounds used in the low-pressure sections for purifying melamine-containing streams.

Advantageously, NIR spectroscopy allows to continuously monitoring ammonia and water content thereby providing essential information regarding the efficiency of CO₂ stripping, which is released during the melamine synthesis reaction. This also partially controls any possible hydrolysis of urea into ammonium carbamate and subsequently into CO₂ and NH₃. Such control is crucial for mitigating corrosion phenomena in the high-temperature melamine synthesis section because ammonium carbamate is an extremely corrosive substance at high temperature and pressure.

Advantageously, in the low-pressure sections of the melamine process (i.e., the sections downstream of melamine synthesis), a continuous monitoring of the alkaline compound content employed for purifying melamine-containing streams allows a stringent control over the purification unit operations. This optimization not only enhances consumption efficiency but also predicts the downstream impacts on downstream sections, such as crystallization and wastewater treatment (WWT).

Advantageously, a continuous monitoring of residual melamine content and its derivatives (like precursors and byproducts) within the WWT section allows to optimize high-pressure steam consumption. This ensures, e.g., high-performance operation of the hydrolyzer, maintaining residual compound concentrations in treated process water below a few parts per million (ppm).

In integrated urea-melamine plants, the gaseous by-products generated during melamine synthesis, primarily off-gas, are directed to an offgas condenser before being recycled to the high-pressure urea synthesis process or equivalent sections. According to the state of the art, melamine carryover in offgas is unavoidable. Consequently, melamine contamination within the urea solution in various process sections (synthesis, recovery, concentration, and finishing) must be monitored.

However, continuous monitoring of the melamine content in the urea solution according to the present invention is advantageous for minimizing the presence of melamine and its derivatives and meet the standards of urea product quality.

Advantageously, a NIR spectroscopy apparatus can work at high pressures and temperatures and can resist to high corrosive environments, e.g., in presence of ammonium carbamate solutions, due to a preferred implementation of corrosion-resistant NIR spectroscopic probes (e.g., a probe made of a VDM^{®}Alloy 59 or another corrosion-resistant alloy).

Advantageously, NIR spectroscopy allows to obtain rapid and non-destructive NIR spectra on bulk materials. NIR spectra cover also chemical species positioned at a certain depth from the surface due to a longer optical pathlength. For illustrative purposes, an absorption coefficient in the NIR spectral range is relatively low requiring a rather long optical path length (typically comprised from 2 mm to 20 mm, preferably comprised from 4 mm to 15 mm, more preferably comprised from 5 mm to 10 mm).

Advantageously, the method of the present invention allows to achieve a real-time and *in situ* assessment of the chemical species of interest, and hence to obtain an actual picture of a reaction progress and of eventual by-product formation.

Advantageously, the present invention avoids sampling of a specimen of the process stream(s), and is hence capable of determining the chemical species in their environment, so that reaction conditions and analysis conditions are the same.

Advantageously, in comparison with the current analytical methods available for melamine synthesis, the method of the present invention provides a better control, improvement, or optimization of the process parameters.

Advantageously, an analysis performed with NIR spectroscopy requires *de facto* no sample preparation.

Advantageously, the present method allows to obtain NIR spectra almost simultaneously at different locations with a single NIR spectroscopic apparatus connected with a plurality of NIR spectroscopic probes. This simultaneous monitoring of a plurality of different process streams enables to establish how adjustment of one or more parameter(s) at a certain location affects other downstream process streams.

Advantageously, the present method is adapted for determining chemical species in gas phase and in liquid phase.

Advantageously, the acquisition rate of the method of the present invention is not particularly limited, and can range from a detection per minute to a detection per hour or a certain number of hours.

Advantageously, the optical pathlength is selected short enough to avoid saturation of absorption bands of water, while at the same time long enough to allow to measure other species. The one selected is a compromise between the two requirements that works well.

Advantageously, with respect to the competing Raman spectroscopy, in the present invention the sample(s) must not be collected (i.e., sampled) for being analyzed. Furthermore, NIR spectroscopy according to the present invention allows to collect data from larger volumes of process stream(s), so that the collected data are more representative of the entire system.

The invention is now further elucidated with reference to preferred embodiments and with the help of the figures.

### Description of the figures

- Fig. 1:: NIR spectra of solid melamine - 5%, 10%, 20% by weight - in KBr;
- Fig. 2:: Validation curve of melamine in water, calibration model. From Room Temperature to 85 °C; 0-2.07%, environmental pressure;
- Fig. 3:: Validation curve of NaOH in water, calibration model. From Room Temperature to 85 °C; 0-10%. Focus on 0-2%; environmental pressure.

### Detailed description of a preferred embodiment of the present invention

In step (I) of the present method urea is reacted in a melamine synthesis section to obtain melamine and an offgas comprising ammonia (NH₃) and carbon dioxide (CO₂).

Preferably, said method further comprises feeding said offgas to a urea synthesis process, said urea synthesis process providing urea to be reacted in step (I) in an integrated urea and melamine synthesis process.

More preferably, said one or more process stream(s) of said urea synthesis process are subjected to NIR spectroscopy to obtain a NIR spectrum or NIR spectra and thereby a qualitative determination of one or more chemical species in said one or more process stream(s); and said NIR spectrum or NIR spectra are processed to obtain a quantitative determination of said one or more chemical species.

In step (II) one or more process stream(s) of said urea synthesis section are subjected to Near Infrared (NIR) spectroscopy to obtain a NIR spectrum or NIR spectra. The NIR spectrum or NIR spectra contain data (in particular characteristic peaks) that allow to obtain a qualitative determination of one or more chemical species in said one or more process stream(s).

In a subsequent step (III) said NIR spectrum or NIR spectra is/are processed to obtain a quantitative determination of said one or more chemical species.

Steps (II) and (III) are preferably performed in real-time mode, preferably without sampling the one or more process stream(s).

The qualitative determination of step (II) comprises an identification of characteristic peaks of said one or more chemical species in said NIR spectrum or NIR spectra at a specific temperature and at a specific pressure. Temperature and pressure are dictated by the conditions of the specific process stream.

The quantitative determination of step (III) comprises applying a chemometric method to data of said NIR spectra. These data comprise characteristic peak areas/intensities, that can be related to absolute amounts of the chemical species in the process stream through said chemometric method.

The chemometric method involves a multivariate calibration. A univariate calibration is not suitable for such calibration due to an interference between more than two different molecules in a multi-component system.

Process parameters can thus be controlled, improved, or optimized.

The present invention will be further disclosed based on the following non-limiting example.

### Example

For the present tests, a NIR Fourier Transform Spectrometer MATRIX-F II (according to ATEX) by Bruker was used. The spectra were acquired with OPUS/QUANT2 software repeatedly every 30 seconds until the desired condition was reached. The spectral resolution was of 8 cm⁻¹. A single spectrum was acquired as an average of 16 different acquisitions.

Initially, single elements were analyzed with NIR to identify the characteristic peaks of each compound. Exemplary characteristic peak wavenumbers of some chemical species - tested individually and not as a mixture - are listed in the following Table 1 together with temperature (T) and pressure (P) values for which such wavenumbers have been obtained.

**Table 1**

| Chemical species | T (°C) | P (bar) | Wavenumbers (cm⁻¹) |
|---|---|---|---|
| Melamine | 25 | 1 | 4492; 4624; 4728; 4772; 4860; 5004; 5116; 6556; 6712; 6812 |
| Water | 25 | 1 | 8365; 8552; 10240 |
| Ammonia | 10 | 8 | 6076; 7608; 8132; 8364; 9584 |
| Carbon dioxide | 5 | 54 | 6000 - 6500 (Fermi tetrad); 6954; 7189; 7582; |
| Urea | 130 - 140 | 1 | 5463; 7772; 8190; 8325; 9857 |
| Ammonium carbamate | 130 - 140 | 1 | 7858; 8131; 8360; 9602; 9903 |
| Biuret | 130 - 140 | 1 | 7717; 8133; 8307 |

NIR spectra of solid melamine were acquired as follows.

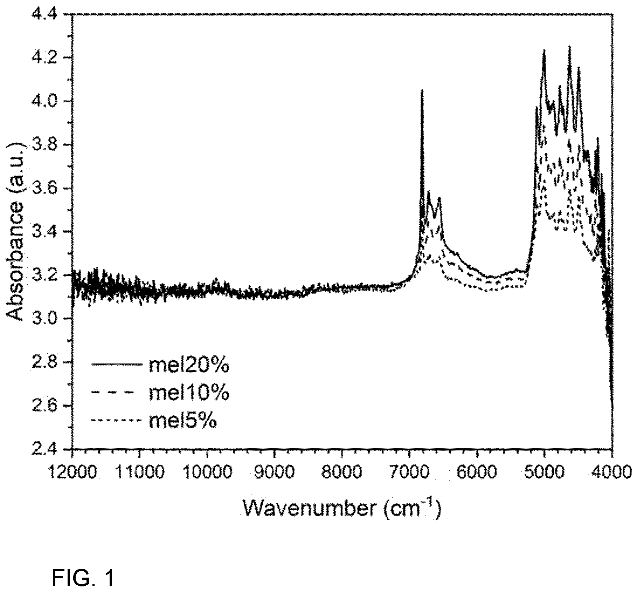

A tablet was prepared with different concentrations (5%, 10%, 20% by weight) of solid melamine in potassium bromide (KBr), and this was analyzed at room temperature and environmental pressure to obtain a melamine spectrum, which is displayed in Fig. 1. This spectrum confirms the features of melamine spectra as analyzed in the literature.

Melamine was also solved in water and analyzed using NIR spectroscopy. First, melamine was charged into water at desired concentrations. The mixture was left to dissolve at room temperature (25 °C). The solution was continuously analyzed using NIR spectroscopy until the signal stabilized, indicating complete dissolution of melamine in water. This procedure was repeated for concentrations of less than 0.4 wt.% of melamine to stay below the maximum solubility limit of melamine in water at room temperature.

The same procedure was carried out with melamine-water solutions (binary mixtures) at various temperatures up to 85°C and melamine concentrations up to 2% by weight, in order to study the presence of overlapping peaks. A shifting of all characteristic peaks was observed in all mixtures with respect to NIR spectra performed on the single chemical species.

A multivariate calibration model was used for the binary mixtures for quantification purposes. Other NIR spectra were obtained for binary mixtures where the chemical species were in different ratios, and in presence of different temperatures.

This allowed for a preliminary analysis of the effects of temperature and higher melamine concentrations, given that the solubility of melamine in water increases with temperature.

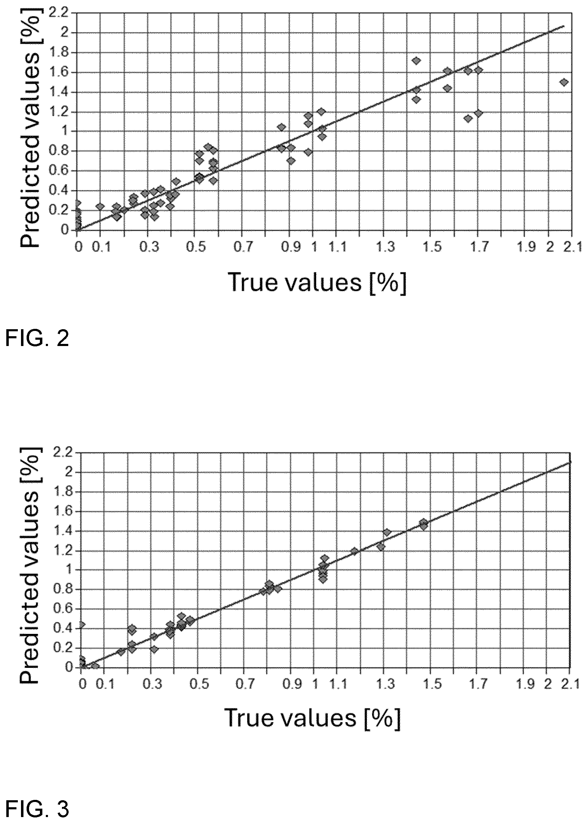

To quantify melamine concentration in water-melamine mixtures using NIR, a Partial Least Squares (PLS) regression technique was employed. Various models were analyzed, and a preliminary calibration was achieved. Fig. 2 shows a preliminary calibration model for melamine at the studied operating conditions. A coefficient of determination (R-Squared or R²) of 0.9109 shows that the data fit well the regression model.

NIR spectra of ternary mixtures (e.g. containing melamine, water, and soda (NaOH)) were also obtained.

For each calibration experiment, a reference solution was prepared with weighted amounts of melamine and water. A first reference NIR spectrum was hence acquired. NaOH was dosed and added to the same solution. A second NIR reference spectrum was then acquired after the system had reached an equilibrium to establish interactions with melamine. Then, further NaOH was cyclically dosed, added to the same solution and analyzed with a NIR spectrum, till NaOH concentrations of 10% by weight were reached.

A PLS regression method (a specific chemometric method) involving a multivariate calibration was used for the ternary mixtures for quantification purposes. In this case as well, the use of PLS technique provides a method to transition from NIR signal to quantification of the NaOH present in the mixture. Fig. 3 shows a calibration model for NaOH at the studied operating conditions. A coefficient R² of 0.9954 shows that the data fit very well the regression model.

Given these tests, the methodology can be extended to mixtures of melamine, water and other components (salts, derivatives, and/or other reagents) at process-relevant operating conditions.

## Claims

1. Use of Near Infrared (NIR) spectroscopy, preferably Fourier Transform-Near Infrared (FT-NIR) spectroscopy, for obtaining a NIR spectrum or NIR spectra and thereby a determination of one or more chemical species in one or more process stream(s) of a melamine process, said chemical species being selected from melamine, melamine salts, melamine derivatives, sodium hydroxide, and combinations of two or more thereof.

2. Use according to the previous claim, wherein said melamine derivatives are selected from melamine deammoniation and condensation derivatives, such as melem, melone, and/or melam, melamine hydrolysis derivatives, such as ammeline, ammelide, and/or cyanuric acid, and their mixtures.

3. Use according to any of the previous claims, wherein said melamine process comprises at least one from among a synthesis process, a quenching process, a purification process, a crystallisation process, a solid-liquid separation process, a waste water treatment process, and/or a drying process.

4. Use according to claim 3, wherein said synthesis process is an integrated urea and melamine synthesis process.

5. Use according to any of the previous claims, wherein said determination comprises or consists of a real-time and *in situ* determination of said chemical species in said process stream(s);
preferably wherein said obtaining the NIR spectrum or NIR spectra is performed without sampling of said one or more process stream(s).

6. Use according to any of the previous claims, wherein said one or more process stream(s) is/are liquid process stream(s), preferably aqueous process stream(s), and wherein said NIR spectroscopy covers a region of the electromagnetic spectrum comprised from 12500 cm⁻¹ to 4000 cm⁻¹, preferably from 9400 cm⁻¹ to 7500 cm⁻¹ and/or from 6100 cm⁻¹ to 5448 cm⁻¹;
and wherein said NIR spectrum or NIR spectra obtained in said region(s) of the electromagnetic spectrum is/are used for said determination of the chemical species.

7. Use according to any of the previous claims, wherein said process stream(s) is/are contained in any of a melamine reactor, a melamine post-reactor, a quenching apparatus, a crystallization section, a desublimation apparatus, a scrubber or washing column, a drying unit, a waste water treatment unit, and their combinations, and/or is/are a feed stream and/or an effluent stream of a melamine reactor, a melamine post-reactor, a quenching apparatus, a crystallization section, a desublimation apparatus, a scrubber or washing column, a drying unit, a waste water treatment unit, and their combinations;
preferably wherein said effluent stream of the melamine reactor and/or of the melamine post-reactor being an offgas stream;
more preferably wherein said melamine reactor and a melamine post-reactor are part of a melamine non-catalytic, high-pressure synthesis section.

8. A method comprising the following steps:
(I) reacting urea in a melamine synthesis section to obtain melamine and an offgas comprising ammonia (NH₃) and carbon dioxide (CO₂);
(II) subjecting one or more process stream(s) of said melamine synthesis section to Near Infrared (NIR) spectroscopy to obtain a NIR spectrum or NIR spectra and thereby a qualitative determination of one or more chemical species in said one or more process stream(s);
(III) processing said NIR spectrum or NIR spectra to obtain a quantitative determination of said one or more chemical species.

9. The method according to claim 8, wherein said step (II) comprises or consists of a real-time and *in situ* determination of said chemical species in said process stream(s);
preferably wherein said subjecting of step (II) is not preceded by sampling of said one or more process stream(s).

10. The method according to any of claims 8-10, wherein said one or more process stream(s) is/are liquid process stream(s), preferably aqueous process stream(s), and wherein said NIR spectroscopy covers a region of the electromagnetic spectrum comprised from 12500 cm⁻¹ to 4000 cm⁻¹, preferably from 9400 cm⁻¹ to 7500 cm⁻¹ and/or from 6100 cm⁻¹ to 5448 cm⁻¹;
and wherein said one or more NIR spectra measured in this region of the electromagnetic spectrum is used for the determination of said one or more chemical species.

11. The method according to any of claims 8-11, wherein said chemical species are selected from among melamine, melamine salts, melamine derivatives, sodium hydroxide, and combinations of two or more thereof;
preferably wherein said melamine derivatives are selected from melamine deammoniation and condensation derivatives, such as melem, melone, and/or melam, melamine hydrolysis derivatives, such as ammeline, ammelide, and/or cyanuric acid, and their mixtures.

12. The method according to any of claims 8-11, wherein said process stream(s) is/are contained in any of a melamine reactor, a melamine post-reactor, a quenching apparatus, a crystallization section, a desublimation apparatus, a scrubber or washing column, a drying unit, a waste water treatment unit, and their combinations, and/or is/are a feed stream and/or an effluent stream of a melamine reactor, a melamine post-reactor, a quenching apparatus, a crystallization section, a desublimation apparatus, a scrubber or washing column, a drying unit, a waste water treatment unit, and their combinations;
preferably wherein said effluent stream of the melamine reactor and/or of the melamine post-reactor being an offgas stream;
more preferably wherein said melamine reactor and a melamine post-reactor are part of a non-catalytic, high-pressure melamine synthesis section.

13. The method according to any of claims 8-12, further comprising feeding said offgas to a urea synthesis process, said urea synthesis process providing urea to be reacted in step (I) in an integrated urea and melamine synthesis process; and
wherein one or more process stream(s) of said urea synthesis process are subjected to NIR spectroscopy to obtain a NIR spectrum or NIR spectra and thereby a qualitative determination of one or more chemical species in said one or more process stream(s); and said NIR spectrum or NIR spectra are processed to obtain a quantitative determination of said one or more chemical species.

14. The method according to any of claims 8-13, wherein said qualitative determination of step (II) comprises an identification of characteristic peak(s) of said one or more chemical species in said NIR spectra at a specific temperature and at a specific pressure, and wherein said quantitative determination of step (III) comprises applying a chemometric method to data of said NIR spectra; preferably said data comprising characteristic peak areas/intensities; more preferably wherein said chemometric method involves a multivariate calibration; even more preferably said chemometric method being or comprising a partial least squares (PLS) regression method, and/or a principal component regression (PCR) method, and/or a multiple linear regression (MLR) method.

15. The method according to any of claims 8-14, wherein said specific temperature is comprised from 300 °C to 470 °C, preferably from 330 °C to 450 °C, more preferably from 350 °C to 420 °C, even more preferably from 365 °C to 385 °C, and wherein said specific pressure is equal to or higher than 70 bar, preferably comprised from 70 bar to 300 bar, more preferably from 72 bar to 250 bar, even more preferably from 75 bar to 200 bar.

16. A plant comprising:
(A) a melamine synthesis section wherein urea is reacted to obtain melamine and an offgas comprising ammonia (NH₃) and carbon dioxide (CO₂);
(B) one or more Near Infrared (NIR) spectroscopic probes positioned at one or more process stream(s) of said melamine synthesis section;
(C) at least one NIR spectroscopic apparatus functionally connected with said NIR spectroscopic probes to obtain a NIR spectrum or NIR spectra;
(D) at least a processing unit of said NIR spectrum or NIR spectra configured to obtain a quantitative determination of said one or more chemical species.
preferably said plant being devoid of sampling means of the one or more process stream(s).

17. The plant according to claim 16, wherein said plant is an integrated urea and melamine synthesis plant comprising said melamine synthesis section and a urea synthesis section fed with said offgas, said urea synthesis section providing urea to be reacted in said melamine synthesis section.
